# EUROPEAN PATENT SPECIFICATION

(11) **EP 0 418 022 B1**
(45) Date of publication and mention of the grant of the patent: **19.07.1995**
(21) Application number: 90309908.3
(22) Date of filing: 11.09.1990
(51) Int. Cl.: G11B 7/00

(54) **Optical head control circuit for optical tape recording/reproducing apparatus**
Regelkreis für optischen Kopf für optisches Aufzeichnungs-/Wiedergabegerät
Circuit de contrôle pour tête optique pour appareil d'enregistrement/de reproduction optique

(30) Priority: 13.09.1989 JP 235604/89
(43) Date of publication of application: 20.03.1991
(73) Proprietor: SONY CORPORATION, Tokyo 141 (JP)
(72) Inventor: Narahara, Tatsuya, Shinagawa-ku Tokyo 141 (JP); Ohsato, Kiyoshi, Shinagawa-ku Tokyo 141 (JP); Kamatani, Yoshiteru, Shinagawa-ku Tokyo 141 (JP); Miyoshi, Hiroshi, Shinagawa-ku Tokyo 141 (JP)
(74) Representative: Cotter, Ivan John

(56) References cited:
- EP-A- 0 284 377
- US-A- 4 669 070

## Description

This relates generally to optical tape recording/reproducing apparatus and, more particularly, to optical head control circuits for use in such apparatus.

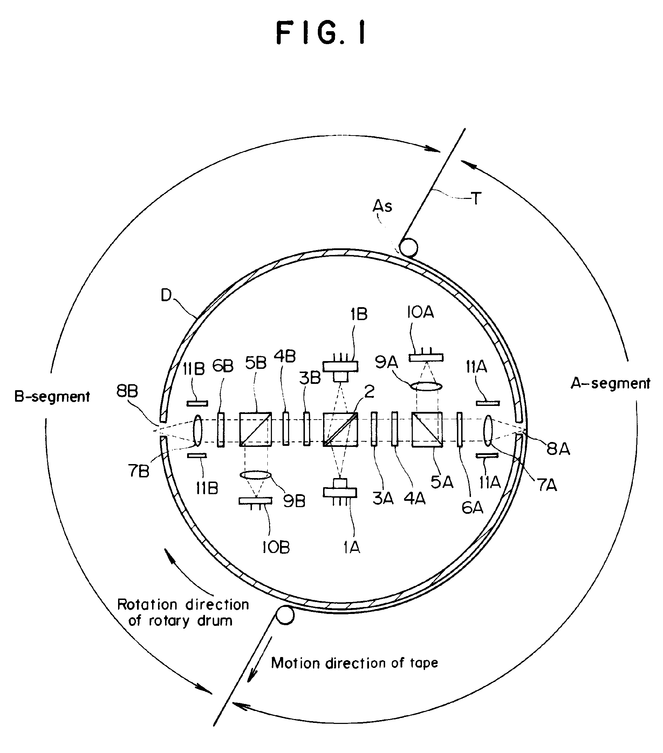

Recording/reproducing apparatus using an optical tape as a recording medium is currently the subject of technical development. A rotary scanning optical head device of such an apparatus is shown schematically in Figure 1 of the accompanying drawings. Typically, a pair of rotary scanning optical heads are employed in the apparatus, the optical head device comprising, for example, two laser beam sources and two heads disposed opposite to each other at an angular interval of 180 degrees. More specifically, in the optical head device of Figure 1, two laser diodes 1A, 1B are incorporated in a rotary drum D at symmetrical positions so as to be spaced apart from each other by a predetermined interval, and a reflection prism 2 is interposed between the laser diodes 1A, 1B. Along light paths of laser beams from the diodes 1A, 1B directed by the reflection prism 2 there are sequentially disposed collimation lenses 3A, 3B, grating plates 4A, 4B, polarised beam splitters 5A, 5B, quarter-wave plates 6A, 6B, and objective lenses 7A, 7B. Recording/reproducing laser beams emitted from the laser diodes 1A, 1B are transmitted via the above-described optical systems to the outside of the rotary drum D through apertures 8A, 8B, respectively, to finally arrive at an optical tape T that is helically arranged around the rotary drum D over an angular range substantially equal to 180 degrees. In this manner, a signal is recorded on the optical tape T, or a signal recorded on the tape T is reproduced therefrom, as slanting tracks of data running transverse to the length of the record medium.

Light (laser beams) reflected from the optical tape T, which can serve as either a reproduced data signal or a focussing/tracking control signal, is passed via the objective lenses 7A, 7B, the quarter-wave plates 6A, 6B, and the polarised beam splitters 5A, 5B to reach light receiving lenses 9A, 9B, by means of which it is irradiated onto two photo-detectors 10A, 10B, respectively. Output signals of the detectors 10A, 10B are supplied to reproduced-signal processing circuits and servo circuits (not shown).

The focussing/tracking control signals produced by such servo circuits are supplied to servo-controlled actuators 11A, 11B, which may comprise dual-axis lens moving mechanisms or the like, so that the objective lenses 7A, 7B are driven to correct focussing positions or to correct tracking positions.

For example, when a pair of optical heads are incorporated in a rotary drum as described above, the optical heads sequentially scan the optical tape every half rotation (half revolution) of the rotary drum in compliance with the motion of the optical tape, thereby performing a helical-scan recording/reproducing operation.

In the case where the tape winding angle is 180 degrees, as in the above-described example, each optical head has, in accordance with the rotation of the rotary drum D as illustrated in Figure 1, a scanning period (hereinafter referred to as the A-segment) in which it faces towards the optical tape T and a non-scanning period (hereinafter referred to as the B-segment) in which it faces away from the optical tape T.

A reflected laser beam is not obtained during the non-scanning period of the head, so that tracking and focussing control signals produced on the basis of the reflected laser beam are not obtained until the optical head advances into the A-segment again. Therefore, the focussing or tracking condition upon entering from the B-segment into the A-segment is rendered unstable because there is no servo control. Moreover, even upon detection of a focussing error signal or a tracking error signal after entering into the A-segment, it is still impossible to achieve rapid control for moving the laser beam spot to a desired track or putting the spot in a correctly focussed condition in response to a detected error signal. Furthermore, as the control error signal becomes greater, a longer pull-in time interval is required for pulling the lens into correct focus or into the correct tracking position due to transient vibrations.

When such required servo pull-in time interval is prolonged, an effective time interval that equals the A-segment minus the pull-in time interval, which is the effective recording/reproducing time, is shortened. This has the consequence of raising a serious problem with respect to the record signal transfer rate or the recording density. In order to solve this problem, it has been proposed that the tracking and focussing control errors at the end of the A-segment are held as in the preceding stage, and that the position of the actuator is locked until the next entry of the optical head into the A-segment.

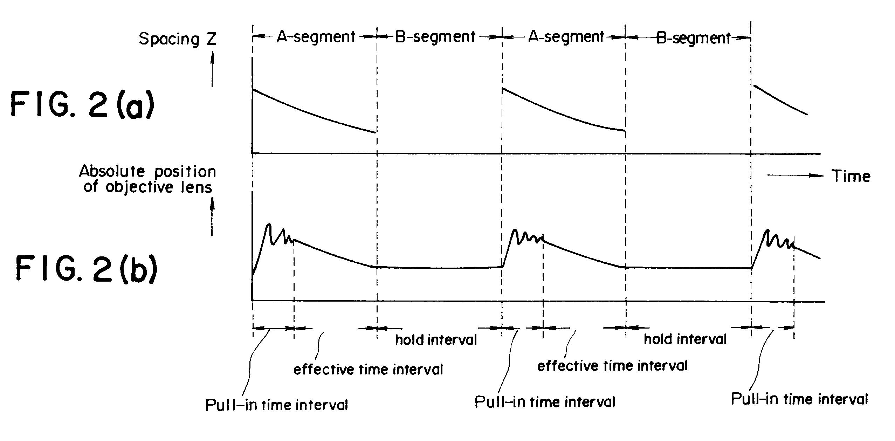

Nevertheless, the spacing Z between the tape T and the optical head in the A-segment during motion of tape T is generally affected, as illustrated in Figure 2(a) of the accompanying drawings, by a thin air film, layer or space formed due to flow of air from a point As in Figure 1 where the moving tape T is initially brought into contact with the drum D, so that the distance Z between tape T and drum D at the beginning of the A-segment is gradually reduced in accordance with the rotation, until the tape T is finally brought into its closest contact with the drum D at the end of the A-segment.

By means of the focussing control signal that follows up such change in the distance Z in the A-segment, the absolute position of the objective lens 7A or 7B is changed in the effective time interval, as shown in Figure 2(b) of the accompanying drawings. If a considerable difference in the correct focussing position between the start portion and the end portion of the A-segment occurs, and the focussing actuator is controlled during the non-scanning period to hold the lens position at the end of the A-segment, then the optical head enters into the next A-segment at a position considerably spaced apart from the correct focussing position. Therefore, at the time of pulling into the correct focussing position, as illustrated, stable servo control cannot rapidly be executed and effective reduction of the pull-in time interval is presented.

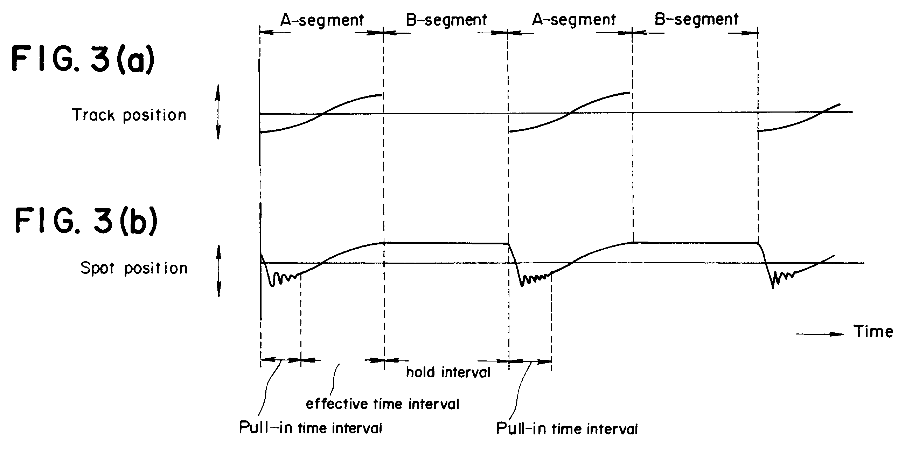

The above problems apply also to tracking control. For example, due to some long-cycle meander of the tape path or the tape edges, the track position is prone to have an S-shaped deviation as shown in Figure 3(a) of the accompanying drawings. Therefore, the tracking control signal will have a waveform as shown in Figure 3(b) of the accompanying drawings, which eventually necessitates a relatively long pull-in time interval.

According to a first aspect of the invention there is provided an optical head control circuit for an optical tape recording/reproducing apparatus having a rotary optical head, the control circuit comprising:
error detector means optically coupled to the rotary optical head for generating a head position error signal; and
head drive means connected to receive the head position error signal from the error detector means for adjusting the position of the rotary optical head during scanning periods in which the rotary optical head faces an optical tape, said scanning periods alternating with non-scanning periods in which the rotary head does not face the optical tape;
the control circuit being characterised by:
error sampling means connected to the error detector means for sampling the head position error signal at the beginning of a said scanning period;
head position detecting means coupled to the rotary optical head for generating a head position signal; and
generating means for generating a head position control signal from the head position signal and the sampled head position error signal and supplying the generated head position control signal to the head drive means, in place of the head position error signal generated by the error detector means, prior to the beginning of a subsequent said scanning period, whereby the head position is adjusted, at the beginning of said subsequent scanning period, to a desired value corresponding to that when the head position error signal was sampled.

A preferred control circuit embodying the invention and described hereinbelow seeks to eliminate or at least reduce the above-noted defects inherent in the prior proposal. The preferred control circuit can, as described in detail below, effectively shorten the pull-in time interval with regard to focussing or tracking control. In the preferred control circuit, an actuator position signal and a focussing error signal (or a tracking error signal) are sampled by a desired-value setting circuit, and a desired value is then prepared in accordance with such sampled values. Subsequently, the focussing position (or the tracking position) at the instant of the next entry of the optical head into a revolution segment (A-segment) of a rotary drum bearing the head in which the head faces the tape is controlled in accordance with desired value thus prepared for the same instant during the previous revolution.

According to another aspect of the invention there is provided an optical head control circuit for an optical tape recording/reproducing apparatus in which an optical tape is wound on the periphery of a tape guide drum over an angle of about 180 degrees, and in which a head assembly includes a pair of optical heads disposed in the tape guide drum at positions spaced apart from each other by an angle of 180 degrees. By addition of an error signal and an actuator position signal at an instant at which the optical head enters a segment (A-segment) in which the head faces the optical tape, a correct focussing position (or correct tracking position) of an objective lens at such instant can be obtained. The result of such addition is then determined as a desired value, and a lens actuator position at the next instant when (one revolution of the drum later) the optical head enters the A-segment is controlled in conformity with such desired value, so that an optimum focussing (or tracking) position of the lens is ensured upon entry into the A-segment.

In this case, the correct focussing position (or correct tracking position) of the lens at the instant of entry into the A-segment is not necessarily rendered exactly coincident with a completely correct focussing (or tracking) position at the next time of entry into the A-segment. Nevertheless, because substantial coincidence is attainable therebetween, it is possible to execute control to a proper position within an extremely short pull-in time interval so as consequently to realise a quick pull-in operation.

The invention will now be further described, by way of illustrative and non-limiting example, with reference to the accompanying drawings, in which:
Figure 1 is a schematic illustration of the structure of a rotary scanning optical head device;
Figures 2(a) and 2(b) graphically show the positions of a tape and a lens, respectively, in the device of Figure 1;
Figures 3 (a) and 3(b) graphically show the positions of a track and a light beam spot, respectively, in the device of Figure 1;
Figure 4 is a block diagram of a control circuit according to an embodiment of the invention;
Figure 5 is a pictorial representation of absolute positions of the lens and the tape in the device of Figure 1; and
Figures 6(a) through to 6(d) represent signal waveforms useful in explaining the operation of the circuit shown in Figure 4.

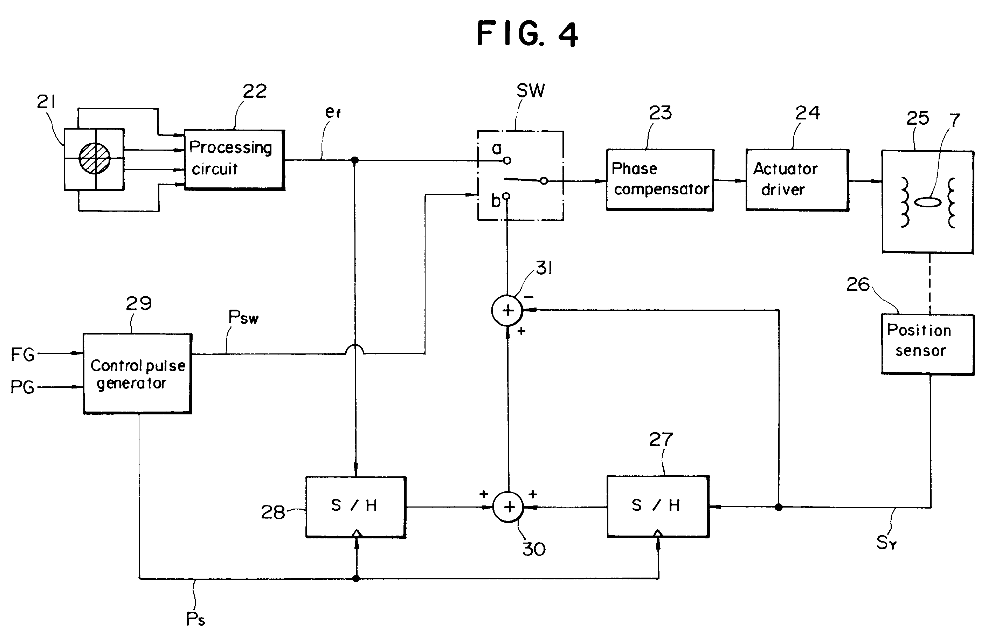

Figure 4 is a block diagram of a focussing control circuit according to an embodiment of the invention for use with a rotary scanning optical head device as described above with reference to Figure 1. In the circuit of Figure 4, a four-part photo-detector 21 detects the light reflected from the optical tape T and a processing circuit 22 produces a focussing error signal ef on the basis of outputs of the detector 21. An output of the processing circuit 22 is fed through a phase compensator 23 and an actuator driver 24 to a focussing actuator 25.

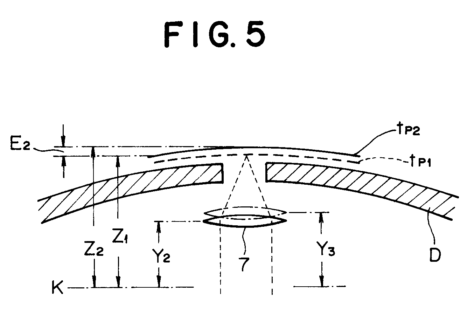

A position sensor 26 senses the position of the actuator 25 relative to an absolute position Y of an objective lens 7 (7A or 7B) relative to a predetermined reference position K, as illustrated in Figure 5. The position sensor 26 produces a position signal Sy for controlling the actuator 25 to retain it at a desired position.

A sample and hold (S/H) circuit 27 samples the position signal Sy by the use of a sampling pulse Ps generated from a control pulse generator 29 at the time of entry into an A-segment. A second S/H circuit 28 samples the focussing error signal ef also in accordance with the sampling pulse Ps. The control pulse generator 29 also produces a control pulse Psw from an FG signal or a PG signal used to servo control a motor (not shown) that is used (in a manner known per se) for driving the drum D in such rotary head scanning systems.

An adder 30 adds the signals that are sampled and held by the S/H circuits 27, 28, thereby producing a so-called desired-value signal that represents a focus control position. A subtractor 31 produces an actual focussing error signal by subtracting the actual position signal Sy from the generated desired-value signal.

A switch circuit SW has terminals a and b that are selectively connected to an output thereof in response to the switching control signal Psw supplied from the control pulse generator 29. As will be described later, the terminal b is connected to the output at a predetermined instant prior to the head entering into the A-segment, and the terminal a is connected to the output at the instant the head actually enters into the A-segment.

When the terminal a of the switch circuit SW is connected to the output, the focussing actuator 25 is controlled by the focussing error signal ef obtained from the four-part photo-detector 21 and processing circuit 22. When, on the other hand, the terminal b is connected to the output, the actuator 25 is controlled by the desired-value signal obtained from the adder 30 after passing through the subtractor 31, whereby the position of the objective lens 7 is determined by the actuator 25. Since the desired value is based on the error signal ef that is obtained from the preceding entry of the head into the A-segment and the absolute actuator position signal Sy, the focussing position at the present entry into the A-segment is controlled to adopt the correct focussing position as determined at the preceding A-segment.

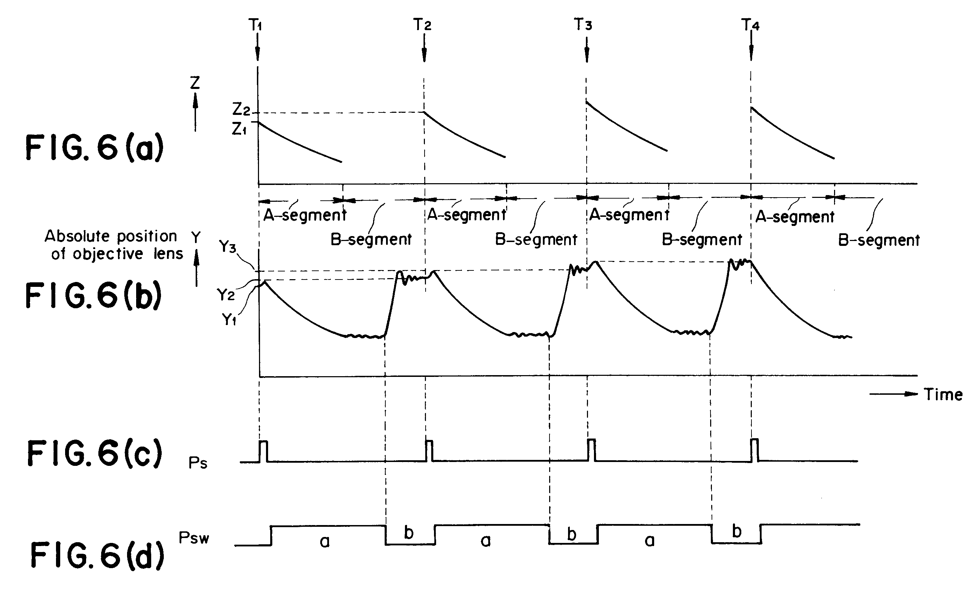

The operation of the above-described embodiment will be described with reference to an exemplary case in which the tape position varies as shown in Figure 6(a). The tape position Z is represented as a distance from the selected reference position K, as illustrated in Figure 5. Further, in Figure 6(b), the lens position as controlled by the focussing control signal is represented as a distance Y from the reference position K.

In the A-segment, the lens position is adjusted under follow-up control with the rotation of the rotary drum D on which the optical head is mounted and with the motion of the tape T, as shown in Figure 6(b). At the time T1 of an entry into the A-segment, the focussing error signal ef and the position signal Sy are sampled by the S/H circuits 27, 28 in accordance with the sampling pulses Ps shown in Figure 6(c) from the control pulse generator 29. Thereafter, the error signal ef is no longer available upon entry into the B-segment (non-scanning period), so that no control of the actuator 25 is executed. Nevertheless, when the terminal b of the switch circuit SW is connected to the output in response to the switching pulse Psw (shown in Figure 6(d)) from the control pulse generator 29, an operation is started in which the actuator 25 is controlled in conformity with the desired-value signal produced from the error signal ef and the position signal Sy at the time T1 and held, so that the objective lens 7 is controlled to adopt a desired position Y2 before the next entry of the head into the A-segment, as shown in Figure 6(b). Because the desired value is the result of adding the error signal ef and the signal Sy representing the actuator position, which corresponds to a position Y1 of the objective lens 7 at the time T1, it follows that positional control at the time T2 of the next entry into an A-segment is executed in accordance with the preceding focussing position determined at the time T1.

The correct focussing position at the time T2 is substantially proximate to the correct focussing position Y2 at the time T1 so that, immediately following the time T2 at which the terminal a of the switch circuit SW is connected to the output, a focus control action causing the correct focussing position to be adopted is attained in an extremely short pull-in time interval based on the error signal ef, and thereafter follow-up control is rendered possible. Thus, due to such short pull-in time interval, it becomes possible to provide a relatively longer effective time for the data recording/reproducing operation.

Subsequently, the desired value at a time T3 of the next entry into an A-segment is determined by the error signal ef and a position signal Sy sampled at the time T2, and a control action similar to the foregoing is executed. More specifically, as shown in Figure 5, the desired lens position at the time T3 is a correct focussing position Y3 at the time T2 and, therefore, it is a position that is determined by adding the absolute position Y2 at the instant T2 and the error E2 at the time T2. This operation is accomplished by adding the signal Sy and the signal ef.

The tape states at the times T1 and T2, respectively, are denoted by tp1 and tp2. The tape states tp1 and tp2 correspond to the tape positions represented at Z1 and Z2 in Figure 6(a).

In the above-described embodiment, the focussing position at each instant of entry of the optical head into the A-segment, in which the head faces towards the tape T, that is controlled to adopt the correct focussing position, may not exactly be attained at the instant the head enters the A-segment. Nevertheless, by following the above-described technique it becomes possible to start the focussing control operation at a lens position which is at least proximate to the correctly focussed state, whereby the pull-in action to the correct focussing position can be achieved in a short time. Needless to say, a control circuit such as that shown in Figure 4 has to be provided for each of the two heads.

Although the above description has been directed to the case of providing focussing control, the same operation can also be performed with regard to tracking control, and the tracking control circuit or system configuration would also be generally the same as in the block diagram of Figure 4. More specifically, although not shown, the circuit or system would be so formed that a tracking error signal et is produced by a side spot detector and a processing circuit and the tracking error signal et is supplied to a tracking actuator. There may also be provided a position sensor for a galvano-mirror or a tracking actuator to shift the objective lens. Other components including S/H circuits and an adder would be provided in the tracking control circuit in the same manner as those employed in the embodiment of Figure 4. Then, even when a track position has an S-shaped deviation or the like as described with reference to Figure 3, the same operation is performed as in the embodiment of Figure 4 so that the tracking position at the instant of entering into the A-segment is controlled to adopt the correct tracking position determined at the instant of the preceding entry into the A-segment, whereby tracking control can be started from a lens position (angle) at least proximate to the correct tracking position. Consequently, it becomes possible also to achieve a control action relative to the correct tracking position or angle in a short time.

In the above-described embodiment, the desired-value setting circuit is arranged to set a desired value by adding the outputs of the S/H circuits 27, 28 to each other by means of the adder 30. Nevertheless, it may be so modified as to hold a desired value by first adding the error signal ef and the position signal Sy by means of an adder and then sampling the added signal by way of a S/H circuit.

According to the optical head control circuit for an optical tape recording/reproducing apparatus as described hereinabove, the focussing position (and/or tracking position) of an optical head at an instant of its entering into an A-segment in which the head faces towards the tape is controlled to adopt the correct focussing position (and/or the correct tracking position) determined at the instant of the preceding entry into the A-segment, so that a pull-in action for attaining a proper position upon the current entry into the A-segment can be achieved in a short time so as consequently to prolong the effective recording/reproducing time.

## Claims

1. An optical head control circuit for an optical tape recording/reproducing apparatus having a rotary optical head, the control circuit comprising:
error detector means (22) optically coupled to the rotary optical head for generating a head position error signal (ef); and
head drive means (24, 25) connected to receive the head position error signal (ef) from the error detector means (22) for adjusting the position of the rotary optical head during scanning periods in which the rotary optical head faces an optical tape (T), said scanning periods alternating with non-scanning periods in which the rotary head does not face the optical tape (T);
the control circuit being characterised by:
error sampling means (28) connected to the error detector means (22) for sampling the head position error signal (ef) at the beginning of a said scanning period;
head position detecting means (26) coupled to the rotary optical head for generating a head position signal (Sy); and
generating means (27, 29, 30, 31, SW) for generating a head position control signal from the head position signal (Sy) and the sampled head position error signal (ef) and supplying the generated head position control signal to the head drive means (24, 25), in place of the head position error signal (ef) generated by the error detector means (22), prior to the beginning of a subsequent said scanning period, whereby the head position is adjusted, at the beginning of said subsequent scanning period, to a desired value corresponding to that when the head position error signal (ef) was sampled.

2. A control circuit according to claim 1, in combination with an optical tape recording/reproducing apparatus which comprises a tape guide drum (D), which is so designed that, in use, the optical tape (T) is wound about the tape guide drum (D) over an angle substantially equal to 180 degrees, and a pair of said rotary optical heads are disposed in the tape guide drum (D) at positions spaced apart from one another by an angle of 180 degrees.

3. A control circuit according to claim 1 or claim 2, wherein said generating means (27, 29, 30, 31, SW) includes a head position sampling circuit (27) arranged to sample the head position signal (Sy) and a mixing means (30) for mixing the sampled head position error signal (ef) with the sampled head position signal (Sy) to produce a mixed output signal.

4. A control circuit according to claim 3, wherein said generating means (27, 29, 30, 31, SW) includes a subtractor circuit (31) for subtracting the head position signal (Sy) from the mixed output signal.

5. A control circuit according to claim 4, wherein said generating means (27, 29, 30, 31, SW) comprises a control pulse generator (29) for producing switching pulses (Psw) in response to a signal (FG, PG) representing a rate of rotation of the rotary optical head, and a switching circuit (SW) for selectively connecting the head position error signal (ef) or an output of the subtractor circuit (31) to the head drive means (24, 25) in response to said switching pulses (Psw).

6. A control circuit according to claim 5, wherein the control pulse generator (29) is operative to produce sampling pulses (Ps) for controlling the error sampling means (28) and the head position sampling circuit (27).

## Patentansprüche

1. Regelschaltung für einen optischen Kopf für ein optisches Bandaufzeichnungs-/-Wiedergabegerät mit einem optischen Rotationskopf, wobei die Regelschaltung folgendes enthält:
Fehlerdetektionsmittel (22), das zur Erzeugung eines Kopfposition-Fehlersignales (ef) optisch mit dem optischen Rotationskopf gekoppelt ist; und
Kopfantriebsmittel (24, 25), die derart verbunden sind, um das Kopfpositions-Fehlersignal (ef) von dem Fehlerdetektionsmittel (22) zum Abgleich der Position des optischen Rotationskopfes während der Abtastperioden empfängt, in denen der optische Rotationskopf einem optischen Band (T) gegenüberliegt, wobei die Abtastperioden mit Nicht-Abtastperioden alternieren, in denen der Rotationskopf nicht dem optischen Band (T) gegenüberliegt;
wobei die Regelschaltung **gekennzeichnet ist** durch:
Fehlerabtastmittel (28), das verbunden ist mit dem Fehlerdetektionsmittel (22) zur Abtastung des Kopfpositons-Fehlersignales (ef) zu Beginn der Abtastperiode;
Kopfpositions-Detektionsmittel (26), das mit dem optischen Rotationskopf zur Erzeugung eines Kopfpositionssignales (Sy) gekoppelt ist; und
Erzeugungsmittel (27, 29, 30, 31, SW) zur Erzeugung eines Kopfpositions- Regelsignales von dem Kopfpositionssignal (Sy) und dem abgetasteten Kopfpositions-Fehlersignal (ef) und zur Bereitstellung des erzeugten Kopfpositions-Regelsignales an die Kopfantriebsmittel (24, 25), anstelle des durch das Fehlerdetektionsmittel (22) erzeugte Kopfpositions-Fehlersignales (ef), bevor die folgende besagte Abtastperiode beginnt, wobei die Kopfposition zu Beginn der besagten folgenden Abtastperiode auf einen gewünschten Wert geregelt wird, der dem entspricht, als das Kopfpositions-Fehlersignal (ef) abgetastet wurde.

2. Regelschaltung nach Anspruch 1, in Verbindung mit einem optischen Bandaufzeichnungs-/-Wiedergabegerät, das eine Bandführungstrommel (D) aufweist, die derart ausgelegt ist, daß im Betrieb das optische Band (T) um die Bandführungstrommel (D) über einen Winkel von im wesentlichen 180° herumgewickelt ist, und ein Paar von besagten optischen Rotationsköpfen ist in der Bandführungstrommel (D) an Positionen plaziert, die gegeneinander um einen Winkel von 180° voneinander beabstandet sind.

3. Regelschaltung nach Anspruch 1 oder 2, worin die besagten Erzeugungsmittel (27, 29, 30, 31, SW) eine Kopfpositions-Abtastschaltung (27) beinhalten, die für die Abtastung des Kopfpositionssignales (Sy) ausgelegt ist und ein Mischmittel (30) zum Mischen des abgetasteten Kopfpositions-Fehlersignales (ef) mit dem abgetasteten Kopfpositionssignal (Sy), um ein Ausgangsmischsignal zu erzeugen.

4. Regelschaltung nach Anspruch 3, worin die besagten Erzeugungsmittel (27, 29, 30, 31, SW) eine Subtraktionsschaltung (31) zur Subtraktion des Kopfpositionssignales (Sy) von dem Ausgangsmischsignal enthalten.

5. Regelschaltung nach Anspruch 4, worin die Erzeugungsmittel (27, 29, 30, 31, SW) einen Regelimpulsgenerator (29) aufweisen, zur Erzeugung von Schaltimpulsen (Psw) als Antwort auf ein Signal (FG, PG), das eine Rotationsrate des optischen Rotationskopfes darstellt, und einen Schaltkreis (SW) zur selektiven Verbindung des Kopfpositions-Fehlersignales (ef) oder eines Ausgangssignales der Subtraktionsschaltung (31) mit den Kopfantriebsmitteln (24, 25), als Antwort auf die besagten Schaltimpulse (Psw).

6. Regelschaltung nach Anspruch 5, worin der Regelimpulsgenerator (29) funktionsfähig ist zur Erzeugung von Abtastimpulsen (Ps) zur Regelung der Fehlerabtastmittel (28) und der Kopfpositions-Abtastschaltung (27).

## Revendications

1. Circuit de commande de tête optique pour un appareil d'enregistrement et reproduction à bande optique ayant une tête optique tournante, le circuit de commande comprenant:
- des moyens détecteurs d'erreur (22) couplés optiquement à la tête optique tournante pour produire un signal d'erreur de position de la tête (ef); et
- des moyens d'entraînement de la tête (24, 25) connectés pour recevoir le signal d'erreur de position de la tête (ef) issu des moyens détecteurs d'erreur (22) pour régler la position de la tête optique tournante pendant les périodes de balayage dans lesquelles la tête optique tournante fait face à une bande optique (T), lesdites périodes de balayage alternant avec des périodes sans balayage, dans lesquelles la tête optique tournante ne fait pas face à la bande optique (T),
le circuit de commande étant caractérisé par:
- des moyens d'échantillonnage d'erreur (28) conectés aux moyens détecteurs d'erreur (22) pour échantillonner le signal d'erreur de position (ef) au début d'une dite période de balayage;
- des moyens de détection de position de la tête (26) couplés à la tête optique tournante pour produire un signal de position de la tête; et
- des moyens générateurs (27, 29, 30, 31, SW) pour produire un signal de commande de position de la tête à partir du signal de position de la tête (Sy) et du signal d'erreur de position de la tête (ef), et fournir le signal de commande de position de la tête produit aux moyens d'entraînement de la tête (24, 25) à la place du signal d'erreur de position de la tête (ef) produit par les moyens détecteurs d'erreur (22) avant le début d'une dite période de balayage suivante, ce par quoi la position de la tête optique est réglée, au début de la période de balayage suivante, à une valeur désirée correspondant à celle obtenue lorsque le signal d'erreur de position de la tête (ef) a été échantillonné.

2. Circuit de commande selon la revendication 1, en combinaison avec un appareil d'enregistrement et reproduction à bande optique qui comprend un tambour formant guide de bande (D) qui est conçu de telle manière qu'en fonctionnement la bande optique (T) soit enroulée autour du tambour formant guide de bande (D) sur un angle sensiblement égal à 180°, et une paire de dites têtes optiques tournantes est disposée dans le tambour formant guide de bande (D) à des positions espacées l'une de l'autre par un angle de 180°.

3. Circuit de commande selon la revendication 1 ou la revendication 2, dans lequel lesdits moyens générateurs (27, 29, 30 31, SW) comportent un circuit échantillonneur de position de la tête (27) agencé pour échantillonner le signal de position de la tête (Sy) et des moyens de mélange (30) pour mélanger le signal d'erreur de position de la tête échantillonné (ef) avec le signal de position de la tête échantillonné (Sy) pour produire un signal de sortie mélangé.

4. Circuit de commande selon la revendication 3, dans lequel lesdits moyens générateurs (27, 29, 30, 31, SW) comportent un circuit soustracteur (31) pour soustraire le signal de position de la tête (Sy) du signal de sortie mélangé.

5. Circuit de commande selon la revendication 4, dans lequel lesdits moyens générateurs (27, 29, 30, 31, SW) comprennent un générateur d'impulsions de commande (29) pour produire des impulsions de commutation (Psw) en réponse à un signal (FG, PG) représentant une vitesse de rotation de la tête optique tournante, et un circuit de commutation (SW) pour connecter sélectivement le signal d'erreur de position de la tête (df) ou le signal de sortie du circuit soustracteur (31) aux moyens d'entraînement de la tête (24, 25) en réponse auxdites impulsions de commutation (Psw).

6. Circuit de commande selon la revendication 5, dans lequel le générateur d'impulsions de commande (29) fonctionne pour produire des impulsions d'échantillonnage Ps pour commander les moyens d'échantillonnage d'erreur (28) et le circuit d'échantillonnage de la position de la tête (27).
